# EUROPEAN PATENT APPLICATION

(11) **EP 4 679 733 A1**
(43) Date of publication of application: **14.01.2026**
(21) Application number: 24766165.5
(22) Date of filing: 04.01.2024
(51) Int. Cl.: H04B 10/291

(54) **AMPLIFICATION APPARATUS AND METHOD FOR OPTICAL SIGNAL, AND OPTICAL COMMUNICATION SYSTEM**

(30) Priority: 03.03.2023 CN 202310204096
(71) Applicant: Accelink Technologies Co., Ltd., Wuhan, Hubei 430000 (CN)
(72) Inventor: FANG, Di, Wuhan, Hubei 430000 (CN); BU, Qinlian, Wuhan, Hubei 430000 (CN); FU, Chengpeng, Wuhan, Hubei 430000 (CN); LE, Menghui, Wuhan, Hubei 430000 (CN); CHEN, Jun, Wuhan, Hubei 430000 (CN)
(74) Representative: SONN Patentanwälte GmbH & Co KG
(86) International application number: PCT/CN2024/070667
(87) International publication number: WO 2024/183442

(57) **Abstract**

Disclosed are an apparatus and method for amplifying an optical signal, and an optical communication system. The apparatus comprises: a fourth optical processor configured to receive and multiplex second and third pump light, to form first hybrid pump light; a third optical processor configured to receive first pump light; a second optical processor configured to receive and multiplex the first pump light and the first hybrid pump light, to form second hybrid pump light; a first optical processor configured to receive and multiplex the second hybrid pump light and fourth pump light, to form third hybrid pump light; and a transmission optical fiber configured to receive a full-band service optical signal and the third hybrid pump light, and amplify an optical signal of at least one waveband in the service optical signal on the basis of the third hybrid pump light.

## Description

### CROSS-REFERENCE TO RELATED APPLICATION(S)

The present disclosure claims the priority of the following patent application:
(1). A Chinese patent application with the application number of 202310204096.2 filed before China National Intellectual Property Administration (CNIPA) on March 03, 2023, titled "APPARATUS AND METHOD FOR AMPLIFYING OPTICAL SIGNAL, AND OPTICAL COMMUNICATION SYSTEM."

### TECHNICAL FIELD OF THE DISCLOSURE

Embodiments of the present disclosure relate to the optical fiber communication technology, in particular to an apparatus and method for amplifying an optical signal (OS), and an optical communication system.

### BACKGROUND

In the field of optical communication, in order to make a communication system have a large enough capacity, an ultra-wideband optical signal amplification device has become one of indispensable devices in the field of optical communication, and particularly, an erbium-doped optical fiber amplifier and a Raman optical fiber amplifier are widely applied in an optical communication system. At present, along with the continuous development of optical fiber technology, the use of erbium-doped optical fiber amplifier and Raman optical fiber amplifier is becoming more and more mature, and the capacity and transmission distance of optical fiber communication have been greatly improved. However, for the full-band in an optical signal being amplified and then being able to be effectively transmitted in the optical communication system, there is currently no corresponding research.

### SUMMARY

In view of the above, the embodiments of the present disclosure provide an apparatus and method for amplifying an optical signal, and an optical communication system, which may amplify an O-band optical signal , an E-band optical signal, an S-band optical signal, a C-band optical signal, an L-band optical signal and an U-band optical signal contained in an optical signal, and may perform amplification according to any combination waveband of the O-band, the E-band, the S-band, the C-band, the L-band and the U-band which are flexibly configured.

In order to achieve the above-mentioned purpose, the technical solutions of the present disclosure are realized as follows.

In a first aspect, the embodiments of the present disclosure provide an apparatus for amplifying an optical signal, comprising: a first optical processor, a second optical processor, a third optical processor, a fourth optical processor and a transmission optical fiber, wherein
the fourth optical processor is configured to receive second pump light (PL) and third pump light, and multiplex the second pump light and the third pump light to form first hybrid pump light;
the third optical processor is configured to receive first pump light;
the second optical processor is respectively connected with the fourth optical processor and the third optical processor, and is configured to receive the first pump light and the first hybrid pump light, and multiplex the first pump light and the first hybrid pump light to form second hybrid pump light;
the first optical processor is connected with the second optical processor, and is configured to receive the second hybrid pump light and the fourth pump light, and multiplex the second hybrid pump light and the fourth pump light to form third hybrid pump light; and
the transmission optical fiber is connected with the first optical processor, and is configured to receive a full-band service optical signal, and the third hybrid pump light, and amplify an optical signal of at least one waveband in the service optical signal on the basis of the third hybrid pump light.

In the above-mentioned solution, the transmission optical fiber is further configured to transmit the amplified service optical signal to the first optical processor;
the first optical processor is further configured to receive the amplified service optical signal and transmit the amplified service optical signal to the second optical processor;
the second optical processor is further configured to receive the amplified service optical signal; and decompose the amplified service optical signal to form a first set of optical signals and a second set of optical signals; and then transmit the first set of optical signals to the third optical processor, and transmit the second set of optical signals to the fourth optical processor;
the third optical processor is further configured to receive the first set of optical signals and decompose the first set of optical signals to form a first sub-optical signal and a second sub-optical signal;
the fourth optical processor is further configured to receive the second set of optical signals and decompose the second set of optical signals to form a third sub-optical signal and a fourth sub-optical signal;
wherein the first sub-optical signal, the second sub-optical signal, the third sub-optical signal, and the fourth sub-optical signal comprise optical signals of at least one waveband in the service optical signal, respectively.

In the above-mentioned solution, the apparatus for amplifying an optical signal further comprises: a first optical fiber circulator, a second optical fiber circulator, and a third optical fiber circulator, wherein
the first optical fiber circulator is connected with the third optical processor, and is configured to receive the first pump light, and transmit the first pump light to the third optical processor;
the second optical fiber circulator is connected with the fourth optical processor, and is configured to receive the second pump light, and transmit the second pump light to the fourth optical processor; and
the third optical fiber circulator is connected with the fourth optical processor, and is configured to receive the third pump light, and transmit the third pump light to the fourth optical processor.

In the above-mentioned solution, the first optical fiber circulator is further configured to receive a second sub-optical signal transmitted by the third optical processor and output the second sub-optical signal;
the second optical fiber circulator is further configured to receive and output a third sub-optical signal transmitted by the fourth optical processor; and
the third optical fiber circulator is further configured to receive and output a fourth sub-optical signal transmitted by the fourth optical processor;
wherein the second sub-optical signal, the third sub-optical signal and the fourth sub-optical signal comprise optical signals of at least one waveband in the service optical signal, respectively.

In the above-mentioned solution, the apparatus for amplifying an optical signal further comprises: a first pump generator, a second pump generator, a third pump generator and a fourth pump generator, wherein
the first pump generator is configured to generate the first pump light;
the second pump generator is configured to generate the second pump light;
the third pump generator is configured to generate the third pump light; and
the fourth pump generator is configured to generate the fourth pump light.

In the above-mentioned solution, the first optical processor, the second optical processor, the third optical processor and the fourth optical processor are wavelength division multiplexers for demultiplexing or multiplexing, respectively.

In the above-mentioned solution, the first sub-optical signal comprises an U-band optical signal in the service optical signal; the second sub-optical signal comprises a C-band optical signal and an L-band optical signal in the service optical signal; the third sub-optical signal comprises an S-band optical signal in the service optical signal; and the fourth sub-optical signal comprises an O-band optical signal and an E-band optical signal in the service optical signal.

In the above-mentioned solution, a wavelength range of the first pump light is 1500nm~1560nm; a wavelength range of the second pump light is 1425nm-1500nm; a wavelength range of the third pump light is 1370nm~1433nm; and a wavelength range of the fourth pump light is 1200nm~1370nm.

In a second aspect, the embodiments of the present disclosure provide an optical communication system which supports a processing of a full-band service optical signal, and in the optical communication system, the amplification for the service optical signals uses any of the above-mentioned apparatus for amplifying an optical signal.

In a third aspect, the embodiments of the present disclosure provide a method for amplifying an optical signal, wherein the method comprises:
receiving first pump light, second pump light, third pump light and fourth pump light;
multiplexing the second pump light and the third pump light to form first hybrid pump light;
multiplexing the first pump light and the first hybrid pump light to form second hybrid pump light;
multiplexing the second hybrid pump light and the fourth pump light to form third hybrid pump light; and
amplifying an optical signal of at least one waveband in a service optical signal based on the third hybrid pump light.

The embodiments of the present disclosure provide an apparatus and method for amplifying an optical signal, and an optical communication system. The apparatus for amplifying an optical signal comprises a first optical processor, a second optical processor, a third optical processor, a fourth optical processor and a transmission optical fiber, wherein the fourth optical processor is configured to receive first pump light; the third optical processor is configured to receive second pump light and third pump light, and multiplex the second pump light and the third pump light to form first hybrid pump light; the second optical processor is respectively connected with the fourth optical processor and the third optical processor, and is configured to receive the first pump light and the first hybrid pump light, and multiplex the first pump light and the first hybrid pump light to form second hybrid pump light; the first optical processor is connected with the second optical processor, and is configured to receive the second hybrid pump light and fourth pump light, and multiplex the second hybrid pump light and the fourth pump light to form third hybrid pump light; and the transmission optical fiber is connected with the first optical processor, and is configured to receive a full-band service optical signal, and the third hybrid pump light, and amplify an optical signal of at least one waveband in the service optical signal based on the third hybrid pump light. The apparatus for amplifying an optical signal provided by the embodiments of the present disclosure multiplexes four types of pump light according to four optical processors so as to form hybrid pump light containing multiple wavelengths, and amplifies any several wavebands in the full-band of signals contained in the service optical signal by using this hybrid pump light, so that the full-band optical signal can be effectively transmitted in an optical fiber communication system.

### BRIEF DESCRIPTION OF THE DRAWINGS

In the drawings that are not necessarily drawn to scale, the same reference signs may describe similar components in different views. The same numbers with different letter suffixes may represent different instances of similar components. The drawings generally illustrate various embodiments discussed in the present disclosure by way of instances rather than by limitations.
FIG. 1 is a schematic structural diagram I of an apparatus for amplifying an optical signal provided by an embodiment of the present disclosure.
FIG. 2 is a schematic structural diagram II of an apparatus for amplifying an optical signal provided by an embodiment of the present disclosure.
FIG. 3 is a schematic diagram of a hardware structure of an apparatus for amplifying an optical signal provided by an embodiment of the present disclosure.
FIG. 4 is a schematic flow diagram of a method for amplifying an optical signal provided by an embodiment of the present disclosure.

### DETAILED DESCRIPTION

In order to make the objectives, features, and advantages of the present disclosure be more obvious and clearer, the technical solutions in the embodiments of the present disclosure will be clearly and completely described below in conjunction with the drawings in the embodiments of the present disclosure, obviously, the described embodiments are a part of the present embodiments, but not all embodiments. Based on the embodiments in the present disclosure, all other embodiments obtained by those skilled in the art without inventive labor shall fall within the protection scope of the present disclosure.

At the beginning of 1990s of the 20th century, along with the successful development of the erbium-doped optical fiber amplifier and the increasingly mature of wavelength division multiplexer technology, the capacity and the transmission distance of the optical fiber communication have been greatly improved. However, in recent years, the network presents blowout development, which causes data communication traffic increase twofold, and which has put forward higher requirements for the capacity of optical fiber communication systems. The traditional method for expanding the communication capacity of the optical fiber communication system is nothing more than increasing the single-channel transmission rate, or reducing the channel spacing and increasing the number of channels, however, the influence of the dispersion effect and the nonlinear effect on the system will also increase. Therefore, the effective way for increasing the transmission capacity is to expand the transmission bandwidth of the system, which correspondingly increases the requirements for the performance of the optical fiber amplifier.

A traditional C-band or L-band optical fiber amplifier is mainly an erbium-doped optical fiber amplifier, which uses a stimulated radiation of erbium-doped ion optical fiber to amplify C-band or L-band optical signals. Its advantages are that the optical path structure of the optical fiber amplifier is simple, and relatively high signal output power and gain can be obtained by using relatively small pump power. Its disadvantages are that the erbium ion gain window is relatively narrow, and can only support the standard erbium window; spontaneous radiation of erbium ion will generate noise, and the noise NF of the optical fiber amplifier will be relatively large, which will affect the optical signal-to-noise ratio of the communication system.

The spectrum of a Raman optical fiber amplifier based on the Raman scattering effect is very wide, and when the two light waves with exactly the same frequency interval as the Stokes frequency are incident to the optical fiber at the same time, the low-frequency wave will obtain the optical gain, while the high-frequency wave will attenuate, and the energy thereof will be transferred to the lower-frequency band. If an optical signal with weaker energy and a pump light with higher energy are simultaneously transmitted in the optical fiber, and the difference between the frequencies thereof is within the Raman gain spectrum range of the optical fiber, the optical signal light with weaker energy can be amplified. Theoretically, as long as the proper Raman pump wavelength is selected, the optical signal can be amplified in the full-band 1260nm~1670nm bandwidth, and the distributed Raman amplifier is made by using the Raman scattering effect of optical fiber, which has the characteristics of realizing the amplification of the optical signal in the whole bandwidth. With continuous development of optical fiber technology, non-zero dispersion displacement optical fibers that have been commercialized on a large scale have extremely low optical fiber loss in full-bands, which also makes the O-band, the E-band, the S-band and the U-band which serve as communication channels in the past are rarely considered as potential communication resources. Based on this, the optical fiber amplifier for amplifying O-band optical signals, E-band optical signals, S-band optical signals and U-band optical signals has become a hot topic in experimental work.

In recent years, the occurrence of some pump lasers doped with special fibers and special wavelengths also makes optical fiber amplifiers based on the Raman scattering principle can amplify the O-band optical signals, the E-band optical signals, the S-band optical signals, and the U-band optical signals. However, how to make each discrete waveband optical fiber amplifier to amplify the optical signal of each waveband contained in the service optical signal to enable to effectively transmit the full-band optical signal in an optical fiber communication system, has become a problem that needs to be considered at present.

The technical solutions of the embodiments of the present disclosure multiplex four types of pump light according to four optical processors so as to form hybrid pump light containing a plurality of wavelengths, and amplify any several wavebands of optical signals contained in the full-band service optical signal by using this hybrid pump light, so that the full-band optical signal can be effectively transmitted in an optical fiber communication system.

The structure of the apparatus for amplifying an optical signal of the present disclosure will be described in detail below in combination with the drawings.

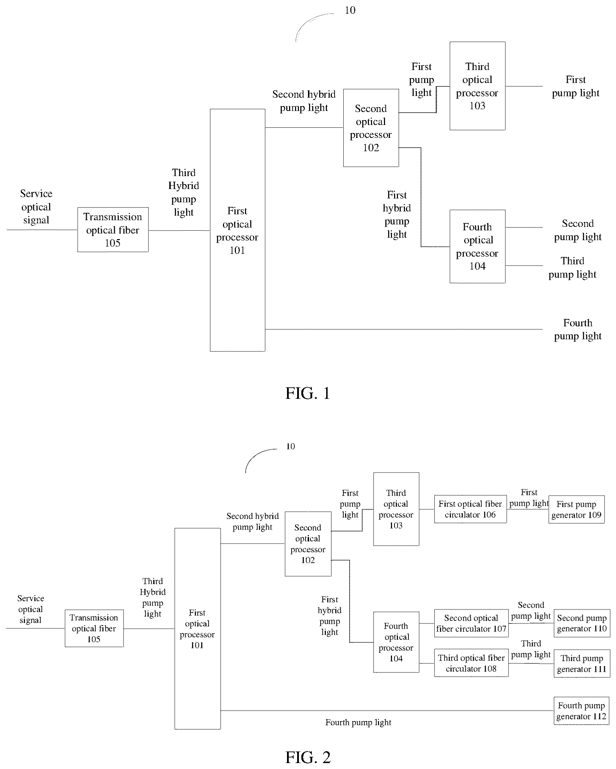

FIG. 1 is a schematic structural diagram I of an apparatus for amplifying an optical signal provided by an embodiment of the present disclosure. As shown in FIG. 1, the apparatus 10 for amplifying an optical signal provided by the embodiment of the present disclosure comprises: a first optical processor 101, a second optical processor 102, a third optical processor 103, a fourth optical processor 104 and a transmission optical fiber 105, wherein:
the fourth optical processor 104 is configured to receive second pump light and third pump light, and perform multiplexing processing on the second pump light and the third pump light, so as to form first hybrid pump light;
the third optical processor 103 is configured to receive first pump light;
the second optical processor 102 is respectively connected with the fourth optical processor and the third optical processor, and is configured to receive the first pump light and the first hybrid pump light, and multiplex the first pump light and the first hybrid pump light, so as to form second hybrid pump light;
the first optical processor 101 is connected with the second optical processor, and is configured to receive the second hybrid pump light and fourth pump light, and multiplex the second hybrid pump light and the fourth pump light, so as to form third hybrid pump light; and
the transmission optical fiber 105 is connected with the first optical processor, and is configured to receive a full-band of service optical signal , and the third hybrid pump light, and amplify an optical signal of at least one waveband in the service optical signal on the basis of the third hybrid pump light.

Here, the first optical processor 101, the second optical processor 102, the third optical processor 103 and the fourth optical processor 104 each may be a wavelength division multiplexer (WDM) configured to demultiplex or multiplex for the sake of users. The transmission optical fiber can be an erbium-doped optical fiber, and the function thereof is an optical fiber for transmitting an optical signal, and meanwhile, it is also a gain medium of the Raman optical fiber amplifier. In an actual application process, the length of the transmission optical fiber may need to be 50 kilometers (km) or more.

The apparatus for amplifying an optical signal provided by the embodiments of the present disclosure multiplexes the first pump light, the second pump light, the third pump light and the fourth pump light through the fourth light processor, the third light processor, the second light processor and the first light processor so as to form the third hybrid pump light. Then, the third hybrid pump light is configured to amplify at least one waveband of optical signal contained in the service optical signal of the full-band, obtained from the transmission process, in the transmission optical fiber 105. It should be noted that, in an actual application process, one or more optical signals in the first pump light, the second pump light, the third pump light, and the fourth pump light may be 0. Therefore, the apparatus for amplifying an optical signal provided by the embodiments of the present disclosure can amplify all of the O-band optical signals, the E-band optical signals, the S-band optical signals, the C-band optical signals, the L-band optical signals and the U-band optical signals contained in the service optical signal, and may also flexibly configure optical signals of any combination of these several wavebands of the O-band, the E-band, the S-band, the C-band, the L-band and the U-band to perform amplification.

It should be noted that, in the above description, what is used is the function of multiplexing processing of the fourth optical processor, the third optical processor, the second optical processor and the first optical processor.

In some embodiments, the transmission optical fiber 105 is further configured to transmit the amplified service optical signal to the first optical processor 101;
the first optical processor 101 is further configured to receive the amplified service optical signal, and transmit the amplified service optical signal to the second optical processor 102;
the second optical processor 102 is further configured to receive the amplified service optical signal; and decompose the amplified service optical signal, so as to form a first set of optical signals and a second set of optical signals; transmit the first set of optical signals to the third optical processor 103; and transmit the second set of optical signals to the fourth optical processor 104;
the third optical processor 103 is further configured to receive the first set of optical signals, and decompose the first set of optical signals, so as to form a first sub-optical signal and a second sub-optical signal; and
the fourth optical processor 104 is further configured to receive the second set of optical signals, and decompose the second set of optical signals, so as to form a third sub-optical signal and a fourth sub-optical signal;
wherein the first sub-optical signal, the second sub-optical signal, the third sub-optical signal, and the fourth sub-optical signal each comprise an optical signal of at least one waveband in the service optical signal.

It should be noted that, in an actual application process, the fourth optical processor, the third optical processor, the second optical processor, and the first optical processor each may further have a function of demultiplexing, that is, decomposing a multi-band hybrid optical signal into multiple single-band optical signals. Specifically, the first optical processor receives the amplified service optical signal transmitted by the transmission optical fiber 105, and transmits the amplified service optical signal to the second optical processor 102; the second optical processor 102 receives the amplified service optical signal, and decomposes the amplified service optical signal, so as to form a first set of optical signals and a second set of optical signals, wherein the first set of optical signals comprises several wavebands of optical signals in the amplified service optical signal; the second set of optical signals comprises several wavebands of optical signals in the amplified service optical signal. The second optical processor 102 will also transmit the first set of optical signals to the third optical processor 103, and transmit the second set of optical signals to the fourth optical processor 104. The third optical processor 103 receives the first set of optical signals, and demultiplexes the first set of optical signals, so as to form a first sub-optical signal and a second sub-optical signal; the fourth optical processor 104 receives the second set of optical signals, and demultiplexes the second set of optical signals, so as to form a third sub-optical signal and a fourth sub-optical signal, wherein the first sub-optical signal, the second sub-optical signal, the third sub-optical signal, and the fourth sub-optical signal each comprise optical signals of at least one waveband in the service optical signal.

As an alternative embodiment, the first sub-optical signal comprises the U-band optical signals in the service optical signal; the second sub-optical signal comprises the C-band optical signals and the L-band optical signals in the service optical signal; the third sub-optical signal comprises the S-band optical signals in the service optical signal; and the fourth sub-optical signal comprises the O-band optical signal and the E-band optical signals in the service optical signal.

Correspondingly, a wavelength range of the first pump light may be 1500nm~1560nm; a wavelength range of the second pump light may be 1425nm-1500nm; a wavelength range of the third pump light may be 1370nm~1433nm; and a wavelength range of the fourth pump light may be 1200nm~1370nm.

It should be noted that the pump light required for amplifying each waveband of optical signals in the service optical signal may be different. For example, the optical signal of the U-band contained in the service optical signal needs to be amplified by the pumping light having the wavelength between 1500nm~1560nm; the optical signal of the C-band and the L-band contained in the service optical signal needs to be amplified by the pump light having the wavelength between 1425nm~1500nm; the optical signal of the S-band contained in the service optical signal needs to be amplified by the pumping light having the wavelength between 1370nm~1433nm; the optical signals of the O-band and the E-band contained in the service optical signal need to be amplified by the pump light having the wavelength between 1200nm~1370nm.

In an actual application process, the first pump light may be a set of pump light whose wavelength comprises 1 to 3 wavelengths between 1500nm~1560nm. In other words, the first pump light is a set of pump light, wherein the wavelength of the optical signal may cover one wavelength between 1500nm~1560nm, or two or three wavelengths between 1500nm~1560nm. In this way, the reason that the first pump light is made to cover a plurality of wavelengths of pump light is for amplifying optical signals of each wavelength in the U-band contained in the service optical signal, instead of only amplifying optical signals of a portion of the wavelengths therein.

Similarly, the second pump light may be a set of pump light whose wavelength comprises 1 to 3 wavelengths between 1425nm~1500nm. The third pump light may be a set of pump light whose wavelength comprises 1 to 3 wavelengths between 1370nm~1433nm; and the fourth pump light may be a set of pump light whose wavelength comprises 2~3 wavelengths between 1200nm~1370nm.

In some embodiments, as shown in FIG. 2, the apparatus 10 further comprises a first optical fiber circulator 106, a second optical fiber circulator 107, and a third optical fiber circulator 108, wherein:
the first optical fiber circulator 106 is connected with the third optical processor, and is configured to receive the first pump light, and transmit the first pump light to the third optical processor;
the second optical fiber circulator 107 is connected with the fourth optical processor, and is configured to receive the second pump light, and transmit the second pump light to the fourth optical processor; and
the third optical fiber circulator 108 is connected with the fourth optical processor, and is configured to receive the third pump light, and transmit the third pump light to the fourth optical processor.

In some embodiments, the first optical fiber circulator 106 is further configured to receive a second sub-optical signal transmitted by the third optical processor and output the second sub-optical signal;
the second optical fiber circulator 107 is further configured to receive a third sub-optical signal transmitted by the fourth optical processor and output the third sub-optical signal; and
the third optical fiber circulator 108 is further configured to receive a fourth sub-optical signal transmitted by the fourth optical processor and output the fourth sub-optical signal;
wherein the second sub-optical signal, the third sub-optical signal and the fourth sub-optical signal each comprise an optical signal of at least one waveband in the service optical signal.

It should be noted that the purpose of using the optical fiber circulator here is to respectively transmit the optical signal of a certain waveband in the amplified service optical signal and a certain pump light which is in different transmission directions in the same optical communication system. For example, the first optical fiber circulator 106 transmits the first pump light to the third optical processor, and transmits the amplified second sub-optical signal. The effect of the other optical fiber circulator is the same, which is not repeated here.

In some embodiments, as shown in FIG. 2, the apparatus 10 further comprises a first pump generator 109, a second pump generator 110, a third pump generator 111 and a fourth pump generator 112, wherein:
the first pump generator is configured to generate the first pump light;
the second pump generator is configured to generate the second pump light;
the third pump generator is configured to generate the third pump light; and
the fourth pump generator is configured to generate the fourth pump light.

It should be noted that the first pump generator, the second pump generator, the third pump generator and the fourth pump generator may be light-emitting diodes, or other components, and details are not described herein again.

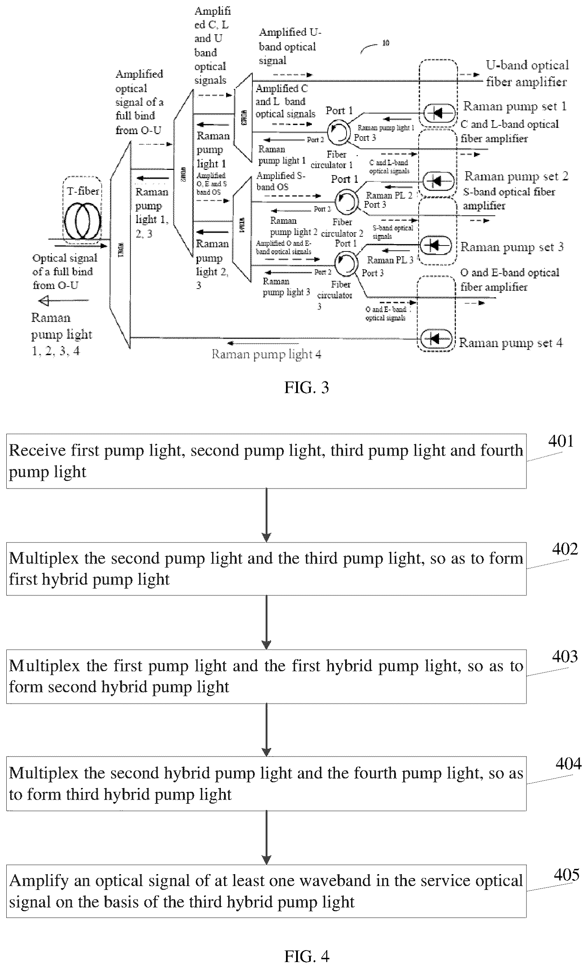

In order to understand the present application, as shown in FIG. 3, it shows a schematic diagram of a hardware structure of an apparatus for amplifying an optical signal provided by an embodiment of the present disclosure. It should be noted that, in FIG. 3, the transmission optical fiber is also exactly the afore-mentioned transmission optical fiber; WDM1, WDM2, WDM3, and WDM4 are also exactly a kind of the specifically implemented hardware of the first optical processor, the second optical processor, the third optical processor and the fourth optical processor as mentioned before, which has the functions of demultiplexing and multiplexing; the optical fiber circulator 1, the optical fiber circulator 2 and the optical fiber circulator 3 are also exactly a kind of specifically implemented hardware of the first optical fiber circulator, the second optical fiber circulator and the third optical fiber circulator as mentioned before, and the three are the same in structure. Each optical fiber circulator has three ports: a port 1, a port 2 and a port 3, the specific application of which will be described subsequently. Raman pump light 1, Raman pump light (PL) 2, Raman pump light 3 and Raman pump light 4 are also exactly sequentially the first pump light, the second pump light, the third pump light and the fourth pump light as mentioned before. Diodes comprised in the Raman pump set 1, the Raman pump set 2, the Raman pump set 3, the Raman pump set 4 are also exactly sequentially a kind of the specifically implemented hardware of the first pump generator, the second pump generator, the third pump generator and the fourth pump generator as mentioned before. The Raman pump light 1, 2 are the afore-mentioned first hybrid pump light; the Raman pump light 1, 2, 3 are the afore-mentioned second hybrid pump light; the Raman pump light 1, 2, 3, 4 are the afore-mentioned third hybrid pump light; the amplified U-band optical signal may be the afore-mentioned first sub-optical signal; the amplified C-band optical signal and the amplified L-band optical signal may be the afore-mentioned second sub-optical signal; the amplified S-band optical signal may be the afore-mentioned third sub-optical signal; and the amplified O-band optical signal and the E-band optical signal may be the afore-mentioned fourth sub-optical signal. It should be particularly noted that the Raman pump set 1 refers to a first dotted line frame from top to bottom in the upper right corner, which comprises a first pump generator (a light-emitting diode) and an optical fiber for outputting the amplified U-band optical signal. The U-band amplifier shown in FIG. 3 may comprise all devices capable of amplifying U-band optical signals in the service optical signal, specifically including the transmission optical fiber (T-fiber) 105, the diode and the connected intermediate optical fiber, together constituting the U-band amplifier, so as to amplify the U-band optical signals in the service optical signal. Similarly, for the Raman pumping set 2, the Raman pumping set 3, the Raman pumping set 4, the C-band and the L-band optical fiber amplifiers, the S-band optical fiber amplifier, and the O-band and the E-band optical fiber amplifiers, the structure and principle thereof will not be repeatedly described one by one.

In FIG. 3, a dotted arrow from left to right represents a transmission direction of a service optical signal carrying a right service; a solid arrow from right to left represents a transmission direction of each set of Raman pump light, wherein the transmission optical fiber connected with the wavelength division multiplexer WDM1 is an optical fiber for transmitting an optical signal, and meanwhile, it is also a gain medium of the Raman optical fiber amplifier. In order to achieve effective Raman gain, the length of the transmission optical fiber needs to be 50km or above. The connection mode of each component of the apparatus for amplifying an optical signal shown in FIG. 3 may comprises: the Raman pump light 1 and the transmission optical fiber compose the U-band Raman optical fiber amplifier, amplifying the U-band optical signal which passes through the transmission optical fiber, wherein the pump light of the Raman pump light 1 is output from the port 2 through the port 1 of the optical fiber circulator 1; the Raman pump light 2 and the transmission optical fiber compose the C-band Raman optical fiber amplifier and the L-band Raman optical fiber amplifier, amplifying the C-band optical signals and the L-band optical signals passing through the transmission optical fiber, wherein the pump light of the Raman pump light 2 is output from the port 2 through the port 1 of the optical fiber circulator 2; similarly, the Raman pump light 3 and the transmission optical fiber compose the S-band Raman optical fiber amplifier, amplifying the S-band optical signals which passes through the transmission optical fiber, wherein the pump light of the Raman pump light 3 is output from the port 2 through the port 1 of the optical fiber circulator 3. Specifically, the logic is that the Raman pump light 1~3 as mentioned above, which have passed through each optical fiber circulator, is multiplexed together with the wavelength division multiplexer WDM1 through the wavelength division multiplexers WDM2, WDM3, WDM4 and the Raman pump light 4 and enters the gain medium transmission optical fiber, and amplifies the transmitted full-band optical signal. That is to say, as mentioned above, the Raman pump light 2 and the Raman pump light 3 are multiplexed through WDM4 to form the Raman pump light 2, 3; then, the Raman pump light 1 and the Raman pump light 2, 3 transmitted through WDM3 are multiplexed through WDM2 to form the Raman pump light 1, 2, 3; then, the Raman pump light 1, 2, 3 and the Raman pump light 4 are multiplexed through WDM1 to form the Raman pump light 1, 2, 3, 4; and the Raman pump light 1, 2, 3, 4 are enabled to enter the transmission optical fiber, to amplify each waveband comprised in the service optical signal which is in the transmission optical fiber.

Then, the amplified full-band optical signal is divided into two parts by the wavelength division multiplexer WDM2 according to the optical wavelength, one part of which is 1530nm~1675nm optical signals (i.e. the first set of optical signals), and the other part of which is 1260nm~1525nm optical signals (i.e. the second set of optical signals). The 1530nm~1675nm optical signals comprise the C-band optical signal, the L-band optical signal and the U-band optical signal, and enter the wavelength division multiplexer WDM3, and then after demultiplexing WDM3, the amplified C-band optical signal and the L-band optical signal (the second sub-optical signal) enter through port 2 and output through port 3 of the optical fiber circulator 1, and the amplified U-band optical signal (the first sub-optical signal) can be directly output, so as to be transmitted backwards. The O-band optical signal, the E-band optical signal and the S-band optical signal of 1260nm~1525nm are then continuously decomposed into two parts by the wavelength division multiplexer WDM4, wherein the optical signal of long wavelength 1460nm-1530nm (which may be the third sub-optical signal) passes through the port 2 of the optical fiber circulator 2 and is output through the port 3 of the optical fiber circulator 2, and. the optical signal of short wavelength 1260nm~1460nm (fourth sub-optical signal) passes through the port 2 of the optical fiber circulator 3 and is output through a port 3 of the optical fiber circulator 3.

The apparatus for amplifying an optical signal provided by the embodiments of the present disclosure can freely multiplex each discrete Raman optical fiber amplifier according to the needs, by using the principle of Raman scattering and the non-reversible characteristics of the unidirectional transmission of the optical fiber circulator. Specifically, aiming at the existing technical vacancy, the present disclosure provides an apparatus capable of multiplexing optical signal amplified by an O-band Raman optical fiber amplifier, an E-band Raman optical fiber amplifier, an S-band Raman optical fiber amplifier, a C-band Raman optical fiber amplifier, an L-band Raman optical fiber amplifier and an U-band Raman fiber amplifier, and this multiplexing apparatus can flexibly configure an amplified optical signal of any combination of these several wavebands of the O-band, the E-band, the S-band, the C-band, the L-band and the U-band according to needs to multiplex.

The embodiments of the present disclosure provide an optical communication system. The optical communication system supports the processing of a full-band service optical signal, and in the optical communication system, the amplification for a service optical signal uses the apparatus for amplifying any one of the optical signals.

As shown in FIG. 4, the embodiments of the present disclosure further provide a method for amplifying an optical signal. As shown in FIG. 4, the method comprises:
S401: receiving first pump light, second pump light, third pump light and fourth pump light;
S402: multiplexing the second pump light and the third pump light, so as to form first hybrid pump light;
S403: multiplexing the first pump light and the first hybrid pump light, so as to form second hybrid pump light;
S404: multiplexing the second hybrid pump light and the fourth pump light, so as to form third hybrid pump light;
S405: amplifying an optical signal of at least one waveband in the service optical signal on the basis of the third hybrid pump light.

It should be noted that the amplification method for an optical signal provided by the embodiments of the present disclosure is based on the afore-mentioned apparatus for amplifying an optical signal. The meanings of the noun involved herein and the referential relationship are also applicable here, and details are not described herein again.

An embodiment of the present disclosure further provides a computer readable storage medium having a computer program stored thereon, when executed by a processor, controls the steps for implementing the above-mentioned method embodiment, and the afore-mentioned readable storage medium includes various media that may store program codes, such as a removable storage device, a read-only memory (Read-Only Memory, ROM), a random access memory (RAM, Random Access Memory), a magnetic disk, or an optical disk, and the like.

It should be understood that "one embodiment" or "an embodiment" mentioned throughout the description means that a particular feature, structure, or characteristic related to the present disclosure is included in at least one embodiment of the present disclosure. Therefore, "in one embodiment" or "in an embodiment" in various places throughout the description does not necessarily refer to the same embodiment. Furthermore, these particular features, structures, or characteristics may be combined in any suitable manner in one or more embodiments. It should be understood that, in various embodiments of the present disclosure, the size of the serial numbers of the above-mentioned processes does not mean the sequence of execution, and the execution sequence of each process should be determined by the function and the internal logic thereof, and should not constitute any limitation on the realization process of the embodiments of the present disclosure. The above-mentioned serial numbers of the embodiments of the present disclosure are only for description, and do not represent the advantages or disadvantages of the embodiments.

It should be noted that, herein, the terms "comprising", "including" or any other variation thereof herein are intended to encompass a non-exclusive inclusion, such that a process, a method, an article, or a device comprising a series of elements not only includes those elements, but also includes other elements not expressly listed, or further includes an element inherent to such a process, method, article, or apparatus. Without further limitation, an element defined by the sentence "including one..." does not exclude the existence of other identical elements in a process, a method, an article or a device that includes the element.

In the several embodiments provided in the present disclosure, it should be understood that the disclosed method and device may be realized in other ways. The device embodiments described above are merely schematic; for example, the division of the units is merely a logical function division, and there may be another division way in actual realization, e.g. multiple units or components may be combined, or may be integrated into another system, or some features may be ignored or not executed. In addition, the coupling, or direct coupling, or the communication connection between the various components shown or discussed may be through some interfaces, and the indirect coupling or communication connection of devices or units may be electrical, mechanical or other forms.

The unit described above as a separate component may or may not be physically separated, and the component displayed as a unit may or may not be a physical unit; that is, it may be located in one place or distributed to multiple network units; and some or all of the units may be selected according to actual needs to realize the purpose of the solutions of the present embodiments.

In addition, each functional unit in each embodiment of the present disclosure may all be integrated into one processing module, or each unit may be separately used as a unit, or two or more units may be integrated into one unit; the above-mentioned integrated unit may be realized in a form of hardware, or may be realized in a form of hardware plus software functional units.

The above description is only the embodiments of the present disclosure, however, the protection scope of the present disclosure is not limited to it, and any person skilled in the art can easily think of changes or substitutions within the technical scope as disclosed by the present disclosure, and which should be included within the protection scope of the present disclosure. Therefore, the protection scope of the present disclosure should be subject to the protection scope of the present disclosure.

## Claims

1. An apparatus for amplifying an optical signal, wherein the apparatus comprises a first optical processor, a second optical processor, a third optical processor, a fourth optical processor and a transmission optical fiber, wherein
the fourth optical processor is configured to receive second pump light and third pump light, and multiplexing the second pump light and the third pump light, so as to form first hybrid pump light;
the third optical processor is configured to receive first pump light;
the second optical processor is respectively connected with the fourth optical processor and the third optical processor, and is configured to receive the first pump light and the first hybrid pump light, and multiplex the first pump light and the first hybrid pump light, so as to form second hybrid pump light;
the first optical processor is connected with the second optical processor, and is configured to receive the second hybrid pump light and fourth pump light, and multiplexing the second hybrid pump light and the fourth pump light, so as to form third hybrid pump light; and
the transmission optical fiber is connected with the first optical processor, and is configured to receive a full-band service optical signal, and the third hybrid pump light, and amplify an optical signal of at least one waveband in the service optical signal on the basis of the third hybrid pump light.

2. The apparatus of claim 1, wherein the transmission optical fiber is further configured to transmit amplified service optical signal to the first optical processor;
the first optical processor is further configured to receive the amplified service optical signal and transmit the amplified service optical signal to the second optical processor;
the second optical processor is further configured to receive the amplified service optical signal; and decompose the amplified service optical signal, so as to form a first set of optical signals and a second set of optical signals; transmit the first set of optical signals to the third optical processor; transmit the second set of optical signals to the fourth optical processor;
the third optical processor is further configured to receive the first set of optical signals and decompose the first set of optical signals, so as to form a first sub-optical signal and a second sub-optical signal; and
the fourth optical processor is further configured to receive the second set of optical signals and decompose the second set of optical signals, so as to form a third sub-optical signal and a fourth sub-optical signal;
wherein the first sub-optical signal, the second sub-optical signal, the third sub-optical signal, and the fourth sub-optical signal comprise an optical signal of at least one waveband in the service optical signal.

3. The apparatus of claim 1, wherein the apparatus further comprises a first optical fiber circulator, a second optical fiber circulator, and a third optical fiber circulator, wherein:
the first optical fiber circulator is connected with the third optical processor, and is configured to receive the first pump light, and transmit the first pump light to the third optical processor;
the second optical fiber circulator is connected with the fourth optical processor, and is configured to receive the second pump light, and transmit the second pump light to the fourth optical processor; and
the third optical fiber circulator is connected with the fourth optical processor, and is configured to receive the third pump light, and transmit the third pump light to the fourth optical processor.

4. The apparatus of claim 3, wherein the first optical fiber circulator is further configured to receive a second sub-optical signal transmitted by the third optical processor and output the second sub-optical signal;
the second optical fiber circulator is further configured to receive a third sub-optical signal transmitted by the fourth optical processor and output the third sub-optical signal; and
the third optical fiber circulator is further configured to receive a fourth sub-optical signal transmitted by the fourth optical processor and output the fourth sub-optical signal;
wherein the second sub-optical signal, the third sub-optical signal and the fourth sub-optical signal each comprise an optical signal of at least one waveband in the service optical signal.

5. The apparatus of claim 1, wherein the apparatus further comprises:
a first pump generator, a second pump generator, a third pump generator and a fourth pump generator, wherein:
the first pump generator is configured to generate the first pump light;
the second pump generator is configured to generate the second pump light;
the third pump generator is configured to generate the third pump light; and
the fourth pump generator is configured to generate the fourth pump light.

6. The apparatus of claim 1, wherein the first optical processor, the second optical processor, the third optical processor and the fourth optical processor each are wavelength division multiplexers configured to demultiplex or multiplex.

7. The apparatus of claim 2, wherein the first sub-optical signal comprises an U-band optical signal in the service optical signal; the second sub-optical signal comprises a C-band optical signal and an L-band optical signal in the service optical signal; the third sub-optical signal comprises an S-band optical signal in the service optical signal; and the fourth sub-optical signal comprises an O-band optical signal and an E-band optical signal in the service optical signal.

8. The apparatus of claim 7, wherein a wavelength range of the first pump light is 1500nm~1560nm; a wavelength range of the second pump light is 1425nm-1500nm; a wavelength range of the third pump light is 1370nm~1433nm; and a wavelength range of the fourth pump light is 1200nm~1370nm.

9. The apparatus of any one of claims 1 to 7, wherein one or more optical signals in the first pump light, the second pump light, the third pump light, and the fourth pump light is able to be 0.

10. The apparatus of any one of claims 1 to 7, wherein the apparatus amplifies all of an O-band optical signal, an E-band optical signal, an S-band optical signal, a C-band optical signal, an L-band optical signal and an U-band optical signal contained in the service optical signal, or configures two or more combinations of optical signals in these several wavebands of the O-band, the E-band, the S-band, the C-band, the L-band and the U-band to perform amplification.

11. An optical communication system, wherein the optical communication system supports a processing of a full-band service optical signal, and in the optical communication system, amplification for a service optical signal uses the apparatus for any one of optical signals for any one of claims 1 to 8.

12. An amplification method for an optical signal, wherein the method comprises:
receiving first pump light, second pump light, third pump light and fourth pump light;
multiplexing the second pump light and the third pump light, so as to form first hybrid pump light;
multiplexing the first pump light and the first hybrid pump light, so as to form second hybrid pump light;
multiplexing the second hybrid pump light and the fourth pump light, so as to form third hybrid pump light; and
amplifying an optical signal of at least one waveband in the service optical signal on the basis of the third hybrid pump light.
